# EUROPÄISCHE PATENTSCHRIFT

(11) **EP 0 508 155 B1**
(45) Veröffentlichungstag und Bekanntmachung des Hinweises auf die Patenterteilung: **19.01.1994**
(21) Anmeldenummer: 92104410.3
(22) Anmeldetag: 13.03.1992
(51) Int. Cl.: B01J 13/04, C08L 1/28

(54) **Verfahren zur Mikroverkapselung von in Wasser emulgierbaren, nicht-thermoplastischen Stoffen**
Process for microencapsulation of products emulsive in water but which are not thermoplastic
Procédé de microencapsulation de produits émulsionnables dans l'eau, non-thermoplastiques

(30) Priorität: 14.03.1991 DE 4108286; 25.09.1991 DE 4131939
(43) Veröffentlichungstag der Anmeldung: 14.10.1992
(73) Patentinhaber: WACKER-CHEMIE GMBH, D-81737 München (DE)
(72) Erfinder: Eck, Herbert, Dr., W-8263 Burghausen (DE); Hopf, Heinrich, W-8263 Burghausen (DE); Fleischmann, Gerald, Dr., W-8263 Burghausen (DE); Innertsberger, Ernst, W-8263 Burghausen (DE); Schmidlkofer, Jakob, W-8261 Mehring (DE)

(56) Entgegenhaltungen:
- EP-A- 0 284 790
- EP-A- 0 311 873
- EP-A- 0 327 351
- DE-C- 739 630

## Beschreibung

Die Erfindung betrifft ein Verfahren zur Mikroverkapselung von in Wasser emulgierbaren, nicht-thermoplastischen Stoffen, die einen höheren Siedepunkt als Wasser aufweisen, wobei die Mikroverkapselung mit wasserlöslichen Polymerisaten mittels Dünnschichttrocknung durchgeführt wird.

Aus der GB-A 892,787 ist ein Verfahren bekannt zur Herstellung von Pulvern bestehend aus Organopolysiloxan, welches mit einem wasserlöslichen Polymeren verkapselt ist. Die Herstellung erfolgt dabei durch Sprühtrocknung einer wäßrigen Emulsion bestehend aus dem Organopolysiloxan, dem wasserlöslichen Polymeren und einem Füllstoff.

Die US-A 3,210,208 beschreibt ein Verfahren zur Herstellung von Organopolysiloxane enthaltenden Pulvern durch Sprühtrocknung wäßriger Emulsionen der Organopolysiloxane, die zusätzlich filmbildende Polymere wie Polyvinylalkohol oder Polyvinylpyrrolidon enthalten.

Ein Verfahren zur Herstellung sprühgetrockneter Pulver bestehend aus mindestens einer organischen Siliciumverbindung und einem wasserlöslichen Polymeren ist aus der EP-A 228657 (US-A 4,704,416) bekannt.

Die EP-A 279373 beschreibt ein Verfahren zur Herstellung von in Wasser redispergierbaren Pulvern durch Sprühtrocknung, wobei die Pulver Organopolysiloxan und ein wasserlösliches Polymer mit einem Trübungspunkt von 35 bis 98°C enthalten.

Der Erfindung lag die Aufgabe zugrunde ein Verfahren zur Herstellung von mikroverkapselten Flocken oder Pulvern zur Verfügung zu stellen, welche in Wasser emulgierbare, nichtthermoplastische Stoffe, die einen höheren Siedepunkt als Wasser aufweisen, enthalten, welches im Vergleich zu den als Stand der Technik bekannten Sprühtrocknungsverfahren energiesparender arbeitet und apparativ weniger aufwendig ist.

Gegenstand der Erfindung ist ein Verfahren zur Herstellung von mikroverkapselten Flocken oder Pulvern durch Trocknung wäßriger Gemische enthaltend
a) eine oder mehrere in Wasser emulgierbare, nicht-thermoplastische Verbindungen, die einen höheren Siedepunkt als Wasser aufweisen und
b) mindestens ein wasserlösliches, filmbildendes Polymer,

wobei der Gehalt der Komponente a) maximal 95 Gew%, bezogen auf das Trockengewicht der Komponenten a) und b), beträgt, dadurch gekennzeichnet, daß
das wasserlösliche, filmbildende Polymer einen Flockungspunkt von 20 bis 98°C hat oder der Flockungspunkt mit Hilfe von Zusatzstoffen auf 20 bis 98°C eingestellt wird und die Trocknung durch Dünnschichttrocknung in einem Temperaturbereich oberhalb des Flockungspunktes durchgeführt wird.

Die zu verkapselnden Stoffe a) sollten wasserunlöslich oder in Wasser schwerlöslich sein und einen deutlich höheren Siedepunkt als Wasser aufweisen. Vorzugsweise beträgt deren Siedepunkt mindestens 150°C bei Normalbedingungen, besonders geeignet ist das Verfahren für Verbindungen aus a) mit einem Siedepunkt von mindestens 170°C. Darüberhinaus ist es von Vorteil, wenn sich die zu verkapselnden Stoffe, unter Normalbedingungen in Wasser emulgieren lassen, das heißt einen Schmelzpunkt kleiner 100°C, vorzugsweise kleiner 60°C aufweisen. Liegt der Schmelzpunkt bei >100°C, so muß naturgemäß unter Druck bei der entsprechenden Temperatur emulgiert werden. Aus filmbildenden Thermoplasten lassen sich mit diesem Verfahren keine redispergierbaren Pulver herstellen.

Als bevorzugte Verbindungen, die mit diesem Verfahren verkapselt werden können, seien genannt:

Organosiliciumverbindungen der Formel RₐSi(OR¹)₄₋ₐ oder deren Teilhydrolysate, wobei R dabei für einen einwertigen Kohlenwasserstoffrest, der mindestens einen gegenüber Wasser bei der jeweiligen Trocknungstemperatur inerten Substituenten aufweisen kann, R¹ für gleiche oder verschiedene Alkyl- oder Alkoxyalkylenreste mit jeweils 1-4 C-Atomen je Rest, steht, a = 0 bis 4 und einem Siedepunkt von mindestens 150°C bei 1020 hPa (abs.).

Organopolysiloxane, bei denen durchschnittlich mindestens zwei Si-C-gebundene, organische Reste je Siliciumatom vorliegen, von denen ein Teil durch Si-gebundenen Wasserstoff ersetzt sein kann. Vorzugsweise Organopolysiloxane der Formel R³R₂SiO(SiR₂O)ₙSiR₂R³, bei denen durchschnittlich mindestens zwei Si-C-gebundene, organische Reste je Siliciumatom vorliegen, von denen ein Teil durch Si-gebundenen Wasserstoff ersetzt sein kann, wobei der Rest R für gleiche oder verschiedene, einwertige Kohlenwasserstoffreste, die gegebenenfalls einen gegenüber Wasser bei der jeweiligen Trocknungstemperatur inerten Substituenten aufweisen können steht, oder R für Wasserstoff steht, vorausgesetzt, daß an jedes Siliciumatom an das ein Wasserstoffatom gebunden ist auch mindestens ein Kohlenwasserstoffrest, vorzugsweise ein Alkylrest mit 1 bis 4 C-Atomen, insbesonders ein Methylrest, gebunden ist. R³ hat die gleiche Bedeutung wie R oder die Bedeutung -OR², wobei R² für ein Wasserstoffatom oder einen der für R genannten Kohlenwasserstoffresten mit 1 bis 18 C-Atomen steht, vorzugsweise ist R² ein Alkylrest mit 1 bis 4 C-Atomen, insbesonders ein Methylrest.
n ist gleich 0 oder ganzzahlig. Vorzugsweise wird n so gewählt, daß das Organopolysiloxan eine kinematische Viskosität von 5 mm²·s⁻¹ bis 10⁵ mm²·s⁻¹ bei 25°C aufweist. Bei Organopolysiloxanen die durchschnittlich mindestens zwei Si-C-gebundene organische Reste je Siliciumatom aufweisen, von denen ein Teil durch Si-gebundenen Wasserstoff ersetzt werden kann, und die abgesehen von dem Si-gebundenen Wasserstoff keine kondensierbaren Gruppen, wie Si-gebundene Hydroxylgruppen oder Alkoxygruppen aufweisen, beträgt die kinematische Viskosität vorzugsweise bis zu 1000 mm²·s⁻¹ bei 25°C.

Organo(poly)siloxane aus Einheiten der Formel R_{c}H_{d}Si(OR¹)ₑ(OH)_{f}O_{[(4-c-d-e-f)/2]}, worin R und R¹ jeweils die oben dafür angegebene Bedeutung haben; c ist 0 bis 3, vorzugsweise 0 bis 1,8; d ist 0 bis 1; e ist 0 bis 3, vorzugsweise 0,01 bis 2,0 und f ist 0 bis 3, vorzugsweise 0,0 bis 0,5; mit der Maßgabe, daß die Summe von c+d+e+f je Einheit höchstens 3,5 ist und der Siedepunkt mindestens 150°C bei 1020 hPa (abs.) beträgt.

Vorzugsweise enthalten die organischen Reste R höchstens 18 Kohlenstoffatome je Rest. Beispiele für Kohlenwasserstoffreste R sind Alkylreste, wie der Methyl-, Ethyl-, n-Propyl-, Isopropyl- , Butyl-, Hexyl und 2-Ethylhexylrest sowie die Octadecylreste; Reste mit Kohlenstoff-Kohlenstoff-Doppelbindung, wie der Vinyl-, Allyl-, Ethylallyl- und Butadienylrest; Cycloalkylreste mit 5 bis 18 C-Atomen, wie der Cyclohexylrest oder der Methylcyclohexylrest; Arylreste, wie der Phenylrest; Alkarylreste, wie Tolylreste und Aralkylreste, wie der Benzylrest.

Beispiele für substituierte Kohlenwasserstoffreste R sind halogenierte Kohlenwasserstoffreste, wie der 3,3,3-Trifluorpropylrest und 3-Chlorpropylrest sowie Chlorphenylreste; Mercaptoalkylreste, wie der 3-Mercaptopropylrest und Acyloxyalkylreste, wie der 3-Methacryloxypropylrest.

Beispiele für Alkylreste R¹ sind der Methyl-, Ethyl, n-Propyl-, Isopropyl-, n-Butyl-, sec.-Butyl- und tert.-Butylrest. Das wichtigste Beispiel für einen Alkoxyalkylenrest R¹ ist der Methoxyethylenrest.

Einzelne Beispiele für zur Herstellung der erfindungsgemäßen Pulver oder bei dem erfindungsgemäßen Verfahren verwendbare organische Siliciumverbindungen sind aus der Gruppe der Silane 3-Mercaptopropyltrimethoxysilan, Vinyltris-(methoxyethylenoxy)-silan, 3-Methacrylpropyltris(methoxyethylenoxy)-silan, n-Octyltriethoxy-silan, 2-Ethylhexyltrimethoxysilan.

Beispiele für geeignete Organopolysiloxane der Formel R³R₂SiO(SiR₂O)ₙSiR₂R³ sind durch Trimethylsiloxygruppen oder Dimethylvinylgruppen endblockierte Dimethylpolysiloxane, durch Trimethylsiloxygruppen endblockierte Methylhydrogenpolysiloxane, durch Trimethylsiloxygruppen endblockierte Mischpolymere aus Dimethylsiloxan- und Methylhydrogensiloxaneinheiten, durch Dimethyl-H-siloxygruppen endblockierte Dimethyl-polysiloxane, sowie in den endständigen Einheiten je eine Si-gebundene Hydroxylgruppe aufweisende Dimethylpolysiloxane eingesetzt werden.

Beispiele für geeignete Organopolysiloxane aus Einheiten der Formel R_{c}H_{d}Si(OR¹)ₑ(OH)_{f}O_{[(4c-d-e-f)/2]}sind das Organopolysiloxan der Summenformel CH₃Si(OC₂H₅)_{0,8}O_{1,1} mit einem durchschnittlichen Molekulargewicht von etwa 600 g/Mol und einer Viskosität von etwa 20 mm²s⁻¹ bei 25°C, das Organopolysiloxan der Summenformel CH₃Si(OCH₃)_{0,8}O_{1,1} mit einem durchschnittlichen Molekulargewicht von etwa 650 g/Mol und einer Viskosität von etwa 30 mm²s⁻¹ bei 25°C, das Organopolysiloxan der Summenformel C₆H₅Si(OC₂H₅)_{0,72}O_{1,14} mit einem durchschnittlichen Molekulargewicht von etwa 3000 g/Mol und einer Viskosität von etwa 25000 mm²s⁻¹ bei 25°C und das Organopolysiloxan der Formel R²Si(OCH₃)₂O_{0,5}, worin 70 % der Anzahl der Reste R² Methylgruppen und 30 % der Anzahl der Reste R² 2-Ethylhexylgruppen sind.

Weiterhin seien > 150°C siedende, wasserunlösliche oder in Wasser schwer lösliche, bei unter 80°C fließfähige, organische und anorganische Verbindungen genannt, die bei den erforderlichen Betriebsbedingungen nicht oder ausreichend langsam mit Wasser reagieren. Beispiele hierfür sind Kohlenwasserstoffe, wie Paraffine, Terpene, Duftstoffe; Halogenkohlenwasserstoffe; Ester, wie z.B. Dioctylphthalat, Dioctyladipat u. a. Weichmacher; Äther, wie Oligo- und Polypropylenglykole; Alkohole, wie Stearylalkohole; Amine, Säuren, Di- und Polysilane, Carbosilane, Siloxancopolymere, Polyethylsilicate.

Beispiele für Paraffine sind Alkene wie 1-Decen. Beispiele für Duftstoffe sind 2,2-Dimethyl-3-(3-methylphenyl)-propanol, die 3-Methyl-2-butenylester (Prenylester) der Essigsäure, Benzoesäure und Salicylsäure, Acetessigester und Tetramethylperhydronaphthofuran. Beispiele für Halogenkohlenwasserstoffe sind Dichlorbenzole, Trichlorbenzole und Perchlorethan. Beispiele für Amine sind Anilin, Toluidine, Dodecylamin und flüssige Polyamine. Beispiele für Säuren sind Capryl-, Dodecyl- und Stearinsäure.

Geeignete Di- und Polysilane sind beispielsweise Poly(cyclohexylmethyl)-silane, Polydihexylsilane, Polydimethylsilane, Poly(octylmethyl)silane, Poly(phenylmethyl)silane, Isopropylmethyl-n-propylmethylpolysilan. Beispiele für Carbosilane und Siloxancopolymere sind Tetramethyldisiloxandivinylbenzolcopolymere, Tetramethylsiloxan-ethylencopolymere, Dimethylsiloxan-bisphenol A-carbonatblockcopolymere, Siloxanblockcopolymere mit Ethylenoxid und/oder Propylenoxid, mit Styrol, α-Methylstyrol, Acrylaten, Methacrylaten Oxazolinen und anderen organischen Oligo- oder Polymeren.

Als wasserlösliche, filmbildende Polymere sind zur Mikroverkapselung der obengenannten Verbindungen solche geeignet, die einen Flockungspunkt von 20 bis 98°C aufweisen oder bei denen man durch Zugabe von Zusatzstoffen, beispielsweise Salzen oder inerten Lösungsmitteln, einen Flockungspunkt von 20 bis 98°C einstellen kann. Insbesonders dann, wenn die wasserlöslichen Polymere zur Salzbildung fähige Substituenten aufweisen, kann der Flockungspunkt auch durch Zusatz von Säuren oder Basen auf den gewünschten Wert eingestellt werden.

Vorzugsweise werden wasserlösliche, filmbildende Polymere mit einem Flockungspunkt von 35 bis 80°C eingesetzt. Die Bestimmung des Flockungspunktes erfolgt dabei, indem man eine 5 %-ige wäßrige Lösung des wasserlöslichen, filmbildenden Polymeren in einem mit einem Rückflußkühler versehenen Kolben mit einer Aufheizrate von 10°C/5 min. erwärmt und die Temperatur als Flockungspunkt bestimmt, bei der die Hauptmenge des Polymeren ausflockt.

Das wasserlösliche, filmbildende Polymere wird dabei in einer Menge von vorzugsweise 5 bis 95 Gew%, bezogen auf die Gesamtmenge an zu verkapselnder Verbindung und wasserlöslichem Polymer im trockenen Pulver, eingesetzt.

Vorzugsweise werden als wasserlösliche, filmbildende Polymere mit einem Flockungspunkt von 20 bis 98°C Celluloseether mit einem durchschnittlichen Substitutionsgrad DS kleiner 3 eingesetzt. Besonders bevorzugt sind: Methylhydroxyethylcelluloseether oder Methylcelluloseether mit einem durchschnittlichen Substitutionsgrad DS von jeweils 1.0 bis 2.5; Methylhydroxypropyl-celluloseether mit einem durchschnittlichen Substitutionsgrad DS von 1.0 bis 2.5 und einem Gehalt an Methoxygruppen von 20 bis 30 Mol% sowie einem Gehalt an Hydroxypropylgruppen von 5 bis 10 Mol%; Hydroxypropyl-celluloseether mit einem durchschnittlichen Substitutionsgrad DS kleiner 3. Bevorzugt sind auch Polyvinylalkohole mit einer Verseifungszahl von 230 bis 450.

Die genannten wasserlöslichen, filmbildenden Polymere können einzeln oder im Gemisch in den oben angegebenen Mengen eingesetzt werden. Die Herstellung der Gemische erfolgt nach bekannten Verfahren. Dabei kann entweder die zu verkapselnde Verbindung oder das zu verkapselnde Stoffgemisch in die wäßrige Polymerlösung einemulgiert werden oder umgekehrt die wäßrige Polymerlösung in die zu verkapselnde Verbindung oder das zu verkapselnde Stoffgemisch. Es kann aber auch das wasserlösliche Polymere in die zu verkapselnde Verbindung oder das zu verkapselnde Stoffgemisch eingemischt und das Wasser unter starkem Rühren dieser Mischung zudosiert werden.

Es können auch wasserlösliche, filmbildende Polymere eingesetzt werden, die keinen Flockungspunkt im Bereich von 20 bis 98°C aufweisen, vorausgesetzt es wird durch Zugabe geeigneter Zusatzstoffe, wie etwa von Salzen, inerten Lösungsmitteln, Säuren oder Basen, ein solcher Flockungspunkt im zu trocknenden wäßrigen Gemisch eingestellt. Beispiele hierfür sind ganz oder teilweise verseifte Polyvinylacetate und deren Copolymerisate mit beispielsweise Ethylen, Propylen, weiteren Vinylestern, mit Acryl- oder Methacrylsäure und deren Derivaten oder Dicarbonsäuren und deren Derivate. Weitere Beispiele sind Polyvinylpyrrolidone, Polyoxazoline, Stärke und Stärkederivate, Polyharnstoffe, Polyurethane, Polyether, Polyamide, Polyester, Polycarbonate; Eiweiß, wie Casein, Gelatine, Pflanzeneiweiß, wie z. B. Soja- oder Maisproteine; modifizierte Polysaccharide wie Pullulan, Pectin, Alginate, Laminarin und Xanthan.

Geeignete Salze sind beispielsweise NaCl, Na₂SO₄ oder CaCl₂. Geeignet sind auch Salze von Carbonsäuren, wie etwa Na-Acetat oder Ammoniumacetat; Sulfate, wie Ammonium-, Natrium-, Kalium-, Eisen(III)- oder Aluminiumsulfat oder Alaun; Carbonate, wie Soda oder Natriumbicarbonat; Borax, Aluminiumtriformiat, Natriumaluminat, Phosphate oder auch die Salze der Gerbsäure. Geeignete inerte Lösungsmittel zur Einstellung des Flockungspunktes sind aliphatische Alkohole, wie Ethanol, Butanol oder Diglykol; Ester, wie etwa Glykolmono- oder Glykoldiacetat; aliphatische Ketone, wie Aceton oder Methylethylketon. Geeignete Säuren sind beispielsweise Ameisensäure, Essigsäure, Propionsäure oder Salzsäure. Geeignete Basen sind beispielsweise Alkalihydroxide, Ammoniak oder Amine.

Die Zugabemengen zur Einstellung des Flockungspunktes auf den gewünschten Wert hängen vor allem von der Natur des wasserlöslichen Polymeren und des zugesetzten Stoffes ab und betragen im allgemeinen zwischen 0.1 und 10.0 Gew%, bezogen auf die Wasserphase im zu trocknenden wäßrigen Gemisch. Vorzugsweise werden die wasserlöslichen, filmbildenden Polymeren in der wäßrigen Salzlösung, dem Lösungsmittel-Wasser-Gemisch oder der sauren bzw. basischen Wasserphase gelöst und dann zur Herstellung der Mischungen eingesetzt. Es ist aber auch möglich, die Salze, Lösungsmittel, Säuren oder Basen der fertigen Mischung zuzumischen.

Zusätzlich zu der zu verkapselnden Verbindung oder zu dem zu verkapselnden Stoffgemisch und dem wasserlöslichem, filmbildenden Polymer können gegebenenfalls noch weitere Zusatzstoffe in dem zu trocknenden wäßrigen Gemisch enthalten sein. Beispiele für solche Zusatzstoffe sind mit Wasser mischbare Lösungsmittel, wie Diacetonalkohol, mit Wasser nicht mischbare Lösungsmittel, wie Xylole, Fungicide, lösliche Farbstoffe, Pigmente, ionogene oder nichtionogene Emulgatoren, Kondensationskatalysatoren, Füllstoffe und Antiblockmittel. Ein geeigneter Füllstoff oder Antiblockmittel mit einer Oberfläche von mindestens 50 m²/g ist beispielsweise pyrogen erzeugtes Siliciumdioxid. Beispiele für Füllstoffe oder Antiblockmittel mit einer Oberfläche von weniger als 50 m²/g sind Kreidepulver, nadelförmiges Calciumcarbonat und Quarzmehl.

Die Füllstoffe und Antiblockmittel werden vorzugsweise in einer Menge von 0.5 bis 20 Gew%, insbesonders 1.0 bis 10.0 Gew% zugegeben, bezogen auf den Anteil an zu verkapselnder Verbindung oder zu verkapselndem Stoffgemisch. Gegebenenfalls können die Füllstoffe und Antiblockmittel hydrophobiert sein; beispielsweise durch Einwirkung von Hexamethyldisiloxan.

Der Wassergehalt in dem zu trocknenden wäßrigen Gemisch wird so bemessen, daß er von 30 bis 95 Gew%, vorzugsweise von 60 bis 90 Gew% beträgt, jeweils bezogen auf das Gesamtgewicht des zu trocknenden Gemisches.

Die Mikroverkapselung erfolgt mittels Dünnschichttrocknung. Dabei verdampft das Wasser und das gegebenenfalls in der Mischung enthaltene Lösungsmittel im Kontakt mit einer beheizten Fläche, auf die zudem ein Inertgas- oder Luftstrom geleitet werden kann. Das wäßrige Gemisch soll dazu als gleichmäßiger Film auf die beheizte Fläche aufgetragen werden. Nach dem Trocknungsvorgang wird die mikroverkapselte Verbindung oder das verkapselte Stoffgemisch von einem Schaber, Messer oder einer entsprechend wirkenden Vorrichtung entfernt.

Vorzugsweise erfolgt die Trocknung im Walzentrocknungsverfahren. Hierzu können die bekannten Vorrichtungen zur Walzentrocknung eingesetzt werden, beispielsweise Einwalzentrockner, Doppelwalzentrockner, Zweiwalzentrockner oder Zweistufenwalzentrockner. Die Aufgabe der zu trocknenden Emulsion hängt von der Konsistenz der Emulsion und von der Art des verwendeten Walzentrockners ab. So gibt es Einwalzentrockner (Tauchwalzentrockner), bei denen die Emulsion von der beheizten Walze durch Eintauchen übernommen wird; die Emulsion kann auf die beheizte Walze aufgesprüht werden oder, sofern es sich um breiige Massen handelt, von oben her auf die Walze aufgetragen werden. Doppelwalzentrockner besitzen zwei in größerem Abstand gelagerte, aufwärtsdrehende Trockenwalzen zwischen denen die Emulsion zugeführt wird. Bei Zweiwalzentrocknern sind die beiden Trockenwalzen in geringem Abstand voneinander gelagert und drehen nach unten. Ein weiteres Beispiel für einen Trockner, der nach dem Prinzip der Dünnschichttrocknung arbeitet ist der Vakuumwalzentrockner.

Wesentlich ist, daß die Dünnschichttrocknung in einem Temperaturbereich erfolgt, der oberhalb des Flockungspunktes des wasserlöslichen Polymers im Gemisch liegt. Die Temperaturen können dabei zwischen 60 und 250°C liegen. Üblicherweise beträgt die Temperatur der Trockenwalze von 60 bis 130°C, besonders bevorzugt zwischen 80 und 115°C. Sind sehr hochsiedende Produkte zu verkapseln, kann die Temperatur auch zwischen 200 und 250°C betragen. Die Rotationsgeschwindigkeit der Trockenwalze wird üblicherweise so eingestellt, daß die Verweilzeit auf der Walze ausreicht, um eine ausreichende Trocknung zu gewährleisten. Durch Veränderung der Umdrehungszahl der Walze/Walzen und, bei Verwendung von Walzentrocknern mit einer Auftragswalze, durch Veränderung des Abstand der Auftragswalze von der Trockenwalze kann man die Trockenbedingungen innerhalb der vorgegebenen Grenzen variieren und somit auf das jeweilige Gemisch bezogen optimieren. Das Trockenprodukt wird mit einem Schaber von der Trockenwalze abgenommen.

Überraschenderweise tritt bei dem erfindungsgemäßen Verfahren, trotz der bei der Dünnschichttrocknung auftretenden Scherkräfte, keine Verletzung der Kapselwand auf. Man erhält damit mit wesentlich weniger aufwendigen Mitteln als bei den vorbekannten Sprühtrocknungsverfahren mikroverkapselte Flocken oder Pulver.

Die bereits genannten Zusatzstoffe, insbesonders Fungicide, Farbstoffe, Pigmente, Kondensationskatalysatoren, Füllstoffe, Antiblockmittel, können natürlich auch erst nach der Dünnschichttrocknung dem flockenförmigen oder pulvrigen Trockenprodukt zugemischt werden.

Die mikroverkapselten Flocken oder Pulver von Organosiliciumverbindungen, die mit der erfindungsgemäßen Verfahrensweise erhalten werden, können im trockenen Zustand, mit Wasser angerührt oder in Wasser redispergiert, als Zusätze zu Lehm, Zement, Gips, Putzen, Beton, zur Fertigung von Kalksandsteinen, sowie zur Herstellung von Anstrichfarben verwendet werden. Weitere Verwendungsmöglichkeiten umfassen die Oberflächenhydrophobierung von Schüttgütern, den Einsatz als Antischaummittel in wäßrigen Systemen beispielsweise zur Oberflächenmodifizierung von Kunststoffen und zur Stabilisierung von Schaumstoffen. Besonders geeignet sind die erfindungsgemäß verkapselten Organosiliciumverbindungen zur Verwendung in Arzneimitteln, insbesonders als Mittel gegen Blähungen.

Das Verfahren eignet sich u. a. auch zur Mikroverkapselung von Duftstoffen, Weichmachern, Flammschutzmitteln, Pflanzenschutzmitteln, Katalysatoren, Haftungsverbesserern und organischen Hydrophobierungsmitteln.

Die nachfolgenden Beispiele sollen das Verfahren näher erläutern.

### Beispiel 1:

Eine Emulsion von 1000 g Trasil (Methylsiliconharz, Handelsprodukt der Wacker-Chemie GmbH) in 2000 g einer Lösung von 100 g einer Methylhydroxypropylcellulose mit einem durchschnittlichen Substitutionsgrad von ca. 1.8 und mit einem Flockungspunkt von 50 - 55°C (Methocel A 15 der Fa. Dow Chemical) wurde auf einem Walzentrockner bei einer Walzentemperatur von 100°C getrocknet. Das Produkt fiel in Form von kleinen, in Wasser gut redispergierbaren Flocken an. Eine 1:1 Mischung mit einem feinteiligen CaCO₃ (Socal U1 der Fa. Solvay), das ein sehr gut rieselfähiges Pulver darstellte, wurde mit Erfolg zur Hydrophobierung von Gips eingesetzt.

### Beispiel 2:

Eine Emulsion von 200 g Dioctylphthalat in 400 g einer wäßrigen Lösung von 20 g Methylcellulose (Thylose MH 50 der Fa. Hoechst) wurde bei einer Walzentemperatur von 103°C wie in Beispiel 1 getrocknet. Das Produkt fiel in Form eines redispergierbaren, glasig brüchigen Filmes an, der in der Austragsschnecke in Schuppen zerkleinert wurde.

### Beispiel 3:

Eine Emulsion von 160 g Sonnenblumenöl in einer wäßrigen Lösung aus 40 g Methocel A 15 der Fa. Dow Chemical in 1600 g Wasser wurde auf einem Walzentrockner bei einer Walzentemperatur von 103°C getrocknet. Es wurde ein redispergierbarer, glasiger, brüchiger Film erhalten, der in der Austragsschnecke zu Schuppen zerfiel.

### Beispiel 4:

160 g Majatol^{R} der Wacker-Chemie GmbH (= 2,2-Dimethyl-3-(3-Methylphenyl-)-propanol und 10 g HDK V15 (hochdisperse Kieselsäure der Wacker-Chemie) wurden in einer Lösung von 40 g Methocel A15 in 1600 g Wasser emulgiert und auf einem Walzentrockner wie in Beispiel 3 getrocknet. Es wurde ein redispergierbarer, in der Austragsschnecke zu einem Pulver zerkleinerter, glasiger Film erhalten.

### Beispiel 5:

200 g Festharz MK (Siliconharz der Wacker-Chemie) wurden in 300 g Trichlorethylen gelöst und in einer Lösung von 40 g Methocel A15 in 1600 g Wasser emulgiert und wie im Beispiel 3 getrocknet. Es wurde ein redispergierbares, rieselfähiges Pulver erhalten.

### Beispiel 6:

Eine Emulsion von 400 g Methylharz 80 (eine ca. 55 - 58 %ige Siliconharzlösung in Toluol der Wacker-Chemie) in 40 g Methocel A15 und 1600 g Wasser wurden analog Beispiel 3 getrocknet. Es wurde ein redispergierbares Pulver erhalten.

### Beispiel 7:

400 g REN 82 (Siliconharz der Wacker-Chemie) wurden in Form einer 50 %igen, toluolischen Lösung in 40 g Methocel A15 und 1600 g Wasser emulgiert und, wie in Beispiel 3 beschrieben, getrocknet. Es wurde ein redispergierbarer, in der Austragsschnecke zu Schuppen zerkleinerter, Film erhalten.

### Beispiel 8:

Eine Emulsion aus 76 g Trasil, 20 g iso-Octyltrimethoxysilan und 4 g HDK V15 (Produkte der Wacker-Chemie) wurde in einer Lösung von 5 g Polyvinylalkohol W25/140 (Produkt der Wacker-Chemie) in 100 g Wasser emulgiert und diese Emulsion mit einer Lösung von 15 g Methocel A15 in 600 g Wasser vermischt und wie in Beispiel 3 getrocknet. Es wurde ein redispergierbarer, in der Austragsschnecke zu Schuppen zerkleinerter, Film erhalten.

### Beispiel 9:

200 g Paraffin wurden bei 80°C in einer Lösung von 46 g Polyvinylalkohol W25/100 (Produkt der Wacker-Chemie) in 1400 g Wasser emulgiert, auf Raumtemperatur gekühlt und mit einer Lösung von 10 g Na₂SO₄ in 90 g Wasser und 100 g einer 10 %igen wäßrigen Dispersion von HDK V15 (Produkt der Wacker-Chemie) versetzt. Diese Mischung wurde, wie in Beispiel 3 beschrieben, getrocknet. Es wurde ein redispergierbares Pulver erhalten.

### Beispiel 10:

Ein Gemisch aus 100 Gewichtsteilen Wasser, 25 Gewichtsteilen eines Organopolysiloxans zusammengesetzt aus 93 Gew% Dimethylpolysiloxan (Brookfield-Viskosität 8000 cps) aktiviert mit 7 Gew% Kieselsäure und Methylkieselsäure (S 132 der Fa. Wacker Chemie GmbH) und 2.5 Gewichtsteilen einer Methylhydroxypropylcellulose mit einem durchschnittlichen Substitutionsgrad DS von etwa 1.8 und mit einem Flockungspunkt von 50 - 55°C (Methocel A 15 der Fa. Dow Chemical) wurde auf einem Walzentrockner bei einer Temperatur von 100°C getrocknet. Dabei fiel das Produkt in einer dünnen, leicht zerfallenden Folie an. Es konnte ohne Probleme zu einem Pulver zermahlen werden und war gut in Wasser redispergierbar.

### Beispiel 11:

Ein Gemisch aus 100 Gewichtsteilen Wasser, 20 Gewichtsteilen eines Organopolysiloxans zusammengesetzt aus (SiHCH₃-O)-Einheiten in der Kette und Si(CH₃)₃-Endgruppen und mit einer kinematischen Viskosität von 2000 bis 4000 mm²/s bei 25°C (H-Siloxan der Wacker-Chemie GmbH) und 2.0 Gewichtsteilen einer Methylhydroxypropylcellulose mit einem durchschnittlichen Substitutionsgrad DS von etwa 1.8 und mit einem Flockungspunkt von 50 - 55°C (Methocel A 15 der Fa. Dow Chemical) wurde auf einem Walzentrockner bei einer Temperatur von 105°C getrocknet. Das Produkt fiel in Form leicht zu Pulvern zerfallender Schnitzel an, welche gut in Wasser redispergierbar waren.

### Beispiel 12:

Ein Gemisch aus 100 Gewichtsteilen Wasser, 20 Gewichtsteilen eines Dimethylpolysiloxans mit Dimethylvinyl-Endgruppen und 2.5 Gewichtsteilen einer Methylhydroxypropylcellulose mit einem durchschnittlichen Substitutionsgrad DS von etwa 1.8 und mit einem Flockungspunkt von 50 - 55°C (Methocel A 15 der Fa. Dow Chemical) wurde auf einem Walzentrockner bei einer Temperatur von 110°C getrocknet. Das Produkt fiel in Form von feinen, leicht zerfallenden Flocken an, die gut in Wasser redispergierbar waren.

### Beispiel 13:

Ein Gemisch aus 100 Gewichtsteilen Wasser, 20 Gewichtsteilen eines Phenylmethylorganopolysiloxans mit einer Viskosität von etwa 100 mm²/s (Siliconöl AP 100 der Wacker-Chemie GmbH) und 2.0 Gewichtsteilen eines teilhydrolysierten Polyvinylacetats mit einem Hydrolysegrad von etwa 77 Mol%, einer Höppler-Viskosität von 6.0 mPa·s in 4%-iger wäßriger Lösung bei 20°C (Polyviol M06/223 der Wacker-Chemie GmbH) und 0.8 Gewichtsteilen Na₂SO₄, wobei der Flockungspunkt der Lösung etwa 60°C betrug, wurde auf einem Walzentrockner bei einer Temperatur von 110°C getrocknet. Das Produkt fiel in Form von feinen Flocken an, die sich leicht zu Pulvern zermahlen ließen und gut in Wasser redispergierbar waren.

### Beispiel 14:

Ein Gemisch aus 100 Gewichtsteilen Wasser, 20 Gewichtsteilen eines Dimethylpolysiloxans mit einer kinematischen Viskosität von 100000 mm²/s und 2 Gewichtsteilen einer Methylhydroxypropylcellulose mit einem durchschnittlichen Substitutionsgrad DS von etwa 1.8 und mit einem Flockungspunkt von 50 - 55°C (Methocel A 15 der Fa. Dow Chemical) wurde auf einer auf 120°C geheizten Glasplatte aufgetragen und getrocknet. Das Produkt fiel in Form von leicht zerreibbaren, größeren Brocken an.

## Patentansprüche

1. Verfahren zur Herstellung von mikroverkapselten Flocken oder Pulvern durch Trocknung wäßriger Gemische enthaltend
a) eine oder mehrere in Wasser emulgierbare, nicht-thermoplastische Verbindungen, die einen höheren Siedepunkt als Wasser aufweisen und
b) mindestens ein wasserlösliches, filmbildendes Polymer,
wobei der Gehalt der Komponente a) maximal 95 Gew%, bezogen auf das Trockengewicht der Komponenten a) und b), beträgt,
dadurch gekennzeichnet, daß
das wasserlösliche, filmbildende Polymer einen Flockungspunkt von 20 bis 98°C hat oder der Flockungspunkt mit Hilfe von Zusatzstoffen auf 20 bis 98°C eingestellt wird und die Trocknung durch Dünnschichttrocknung in einem Temperaturbereich oberhalb des Flockungspunktes durchgeführt wird.

2. Verfahren nach Anspruch 1, dadurch gekennzeichnet, daß die Dünnschichttrocknung in einem Walzentrockner durchgeführt wird.

3. Verfahren nach Anspruch 1 oder 2, dadurch gekennzeichnet, daß die Dünnschichttrocknung in dem Temperaturbereich von 60 bis 250°C durchgeführt wird.

4. Verfahren nach Anspruch 1, 2, oder 3, dadurch gekennzeichnet, daß als wasserlösliche, filmbildende Polymere mit einem Flockungspunkt von 20 bis 98°C Celluloseether mit einem durchschnittlichen Substitutionsgrad DS kleiner 3 oder Polyvinylalkohole mit einer Verseifungszahl von 230 bis 450 eingesetzt werden.

5. Verfahren nach Anspruch 4, dadurch gekennzeichnet, daß Methylhydroxyethyl-celluloseether oder Methyl-celluloseether mit einem durchschnittlichen Substitutionsgrad DS von jeweils 1.0 bis 2.5, Methylhydroxypropyl-celluloseether mit einem durchschnittlichen Substitutionsgrad DS von 1.0 bis 2.5 und einem Gehalt an Methoxygruppen von 20 bis 30 Mol% sowie einem Gehalt an Hydroxypropylgruppen von 5 bis 10 Mol%, Hydroxypropyl-celluloseether mit einem durchschnittlichen Substitutionsgrad DS kleiner 3 eingesetzt werden.

6. Verfahren nach Anspruch 1, 2, oder 3, dadurch gekennzeichnet, daß wasserlösliche, filmbildende Polymere eingesetzt werden, deren Flockungspunkt durch Zugabe von Salzen, inerten Lösungsmitteln, Säuren oder Basen auf 20 bis 98°C eingestellt wird.

7. Verfahren nach Anspruch 6, dadurch gekennzeichnet, daß ganz oder teilweise verseifte Polyvinylacetate oder deren Copolymerisate mit beispielsweise Ethylen, Propylen, weiteren Vinylestern, mit Acryl- oder Methacrylsäure und deren Derivaten oder Dicarbonsäuren oder deren Derivate eingesetzt werden oder Polyvinylpyrrolidone, Polyoxazoline, Stärke und Stärkederivate, Polyharnstoffe, Polyurethane, Polyether, Polyamide, Polyester, Polycarbonate, Proteine oder modifizierte Polysaccharide eingesetzt werden.

8. Verfahren nach einem der Ansprüche 1 bis 7, dadurch gekennzeichnet, daß als Komponente a) eine oder mehrere Verbindungen eingesetzt werden, deren Siedepunkt mindestens 150°C bei Normalbedingungen beträgt.

9. Verfahren nach Anspruch 8, dadurch gekennzeichnet, daß als Komponente a) eine oder mehrere Organosiliciumverbindungen der Formel RₐSi(OR¹)₄₋ₐ oder deren Teilhydrolysate eingesetzt werden, wobei R dabei für einen einwertigen Kohlenwasserstoffrest, der mindestens einen gegenüber Wasser bei der jeweiligen Trocknungstemperatur inerten Substituenten aufweisen kann, R¹ für gleiche oder verschiedene Alkyl- oder Alkoxyalkylenreste mit jeweils 1-4 C-Atomen je Rest, steht, a = 0 bis 4 und die einen Siedepunkt von mindestens 150°C bei 1020 hPa (abs.) aufweisen.

10. Verfahren nach Anspruch 8, dadurch gekennzeichnet, daß als Komponente a) ein oder mehrere Organo(poly)siloxane aus Einheiten der Formel R_{c}H_{d}Si(OR¹)ₑ(OH)_{f}O_{[(4-c-d-e-f)/2]} mit einem Siedepunkt von mindestens 150°C bei 1020 hPa (abs.) eingesetzt werden, worin R dabei für einen einwertigen Kohlenwasserstoffrest, der mindestens einen gegenüber Wasser bei der jeweiligen Trocknungstemperatur inerten Substituenten aufweisen kann, R¹ für gleiche oder verschiedene Alkyl- oder Alkoxyalkylenreste mit jeweils 1-4 C-Atomen je Rest, steht, wobei c ist 0 bis 3, d ist 0 bis 1, e ist 0 bis 3, und f ist 0 bis 3, mit der Maßgabe, daß die Summe von c+d+e+f je Einheit höchstens 3,5 ist.

11. Verfahren nach Anspruch 8, dadurch gekennzeichnet, daß als Komponente a) ein oder mehrere Organo(poly)siloxane der Formel R³R₂SiO(SiR₂O)ₙSiR₂R³ eingesetzt werden und der Rest R dabei für gleiche oder verschiedene, einwertige Kohlenwasserstoffreste, die gegebenenfalls einen gegenüber Wasser bei der jeweiligen Trocknungstemperatur inerten Substituenten aufweisen können steht, oder R für Wasserstoff steht, vorausgesetzt, daß an jedes Siliciumatom an das ein Wasserstoffatom gebunden ist auch mindestens ein Kohlenwasserstoffrest gebunden ist, und R³ die gleiche Bedeutung hat wie R oder die Bedeutung -OR² hat, wobei R² für ein Wasserstoffatom oder einen der für R genannten Kohlenwasserstoffresten mit 1 bis 18 C-Atomen steht, und n gleich 0 oder ganzzahlig ist.

12. Verfahren nach Anspruch 11, dadurch gekennzeichnet, daß als Organopolysiloxane durch Trimethylsiloxygruppen oder Dimethylvinylgruppen endblockierte Dimethylpolysiloxane, durch Trimethylsiloxygruppen endblockierte Methylhydrogenpolysiloxane, durch Trimethylsiloxygruppen endblockierte Mischpolymere aus Dimethylsiloxan- und Methylhydrogensiloxaneinheiten, durch Dimethyl-H-siloxygruppen endblockierte Dimethyl-polysiloxane, sowie in den endständigen Einheiten je eine Si-gebundene Hydroxylgruppe aufweisende Dimethylpolysiloxane eingesetzt werden.

13. Verfahren nach Anspruch 8, dadurch gekennzeichnet, daß als Komponente a) ein oder mehrere wasserunlösliche oder in Wasser schwer lösliche, bei unter 80°C fließfähige, organische oder anorganische Verbindungen, die bei den erforderlichen Betriebsbedingungen nicht oder ausreichend langsam mit Wasser reagieren und einen Siedepunkt von mindestens 150°C bei 1020 hPa (abs.) aufweisen aus der Gruppe der Paraffine, Terpene, Duftstoffe, Halogenkohlenwasserstoffe, Ester, Weichmacher, Äther, Alkohole, Amine, Säuren, Di- und Polysilane, Carbosilane Siloxancopolymere oder Polyethylsilikate eingesetzt werden.

## Claims

1. Process for the production of microencapsulated flakes or powders by drying aqueous mixtures containing
a) one or more water-emulsifiable, non-thermoplastic compounds which have a higher boiling point than water and
b) at least one water-soluble, film-forming polymer, the content of component a) being a maximum of 95% by weight, based on the dry weight of components a) and b), characterised in that the water-soluble, film-forming polymer has a flocculation point of from 20 to 98°C or the flocculation point is adjusted to from 20 to 98°C with the aid of additives, and the drying is carried out by thin-layer drying in a temperature range above the flocculation point.

2. Process according to Claim 1, characterised in that the thin-layer drying is carried out in a roll drier.

3. Process according to Claim 1 or 2, characterised in that the thin-layer drying is carried out in a temperature range of from 60 to 250°C.

4. Process according to Claim 1, 2 or 3, characterised in that the water-soluble, film-forming polymers having a flocculation point of from 20 to 98°C are cellulose ethers having a mean degree of substitution DS of less than 3 or polyvinyl alcohols having a hydrolysis number of from 230 to 450.

5. Process according to Claim 4, characterised in that methylhydroxyethylcellulose ethers or methylcellulose ethers having a mean degree of substitution DS of in each case from 1.0 to 2.5, methylhydroxypropylcellulose ethers having a mean degree of substitution S of from 1.0 to 2.5 and containing from 20 to 30 mol% of methoxy groups and containing from 5 to 10 mol% of hydroxypropyl groups, or hydroxypropylcellulose ethers having a mean degree of substitution DS of less than 3 are employed.

6. Process according to Claim 1, 2 or 3, characterised in that water-soluble, film-forming polymers are employed whose flocculation point is adjusted to from 20 to 98°C by addition of salts, inert solvents, acids or bases.

7. Process according to Claim 6, characterised in that fully or partially hydrolysed polyvinyl acetates or copolymers thereof with, for example, ethylene, propylene, further vinyl esters, with acrylic or methacrylic acid and derivatives thereof or dicarboxylic acids or derivatives thereof are employed or polyvinylpyrrolidones, polyoxazolines, starch and starch derivatives, polyureas, polyurethanes, polyethers, polyamides, polyesters, polycarbonates, proteins or modified polysaccharides are employed.

8. Process according to one of Claims 1 to 7, characterised in that component a) is one or more compounds whose boiling point is at least 150°C under standard conditions.

9. Process according to Claim 8, characterised in that component a) is one or more organosilicon compounds of the formula RₐSi(OR¹)₄₋ₐ or partial hydrolysates thereof, where R is a monovalent hydrocarbon radical which may contain at least one substituent which is inert towards water at the particular drying temperature, R¹ are identical or different alkyl or alkoxyalkylene radicals, in each case having 1-4 carbon atoms per radical, a = 0 to 4 and each have a boiling point of at least 150°C at 1020 hPa (abs.).

10. Process according to Claim 8, characterised in that component a) is one or more organo(poly)siloxanes comprising units of the formula R_{c}H_{d}Si(OR¹)ₑ(OH)_{f}O_{[(4-c-d-e-f)/2]} having a boiling point of at least 150°C at 1020 hPa (abs.) in which R is a monovalent hydrocarbon radical, which may contain at least one substituent which is inert towards water at the particular drying temperature, R¹ are identical or different alkyl or alkoxyalkylene radicals, in each case having 1-4 carbon atoms per radical, c is 0 to 3, d is 0 to 1, e is 0 to 3 and f is 0 to 3, with the proviso that the sum of c+d+e+f is at most 3.5 per unit.

11. Process according to Claim 8, characterised in that component a) is one or more organo(poly)siloxanes of the formula R³R₂SiO(SiR₂O)ₙSiR₂R³ and the radical R is identical or different monovalent hydrocarbon radicals, which may, if desired, contain a substituent which is inert towards water at the particular drying temperature, or R is hydrogen, with the proviso that at least one hydrocarbon radical is also bonded to each silicon atom to which a hydrogen atom is bonded, and R³ is as defined for R or is -OR² where R² is a hydrogen atom or one of the hydrocarbon radicals having 1 to 18 carbon atoms mentioned for R and n is 0 or an integer.

12. Process according to Claim 11, characterised in that the organopolysiloxanes employed are dimethylpolysiloxanes terminally blocked by trimethylsiloxy groups or dimethylvinyl groups, methylhydridopolysiloxanes terminally blocked by trimethylsiloxy groups, copolymers comprising dimethylsiloxane and methylhydridosiloxane units and terminally blocked by trimethylsiloxy groups, dimethylpolysiloxanes terminally blocked by dimethyl-H-siloxy groups, and dimethylpolysiloxanes containing one Si-bonded hydroxyl group in each of the terminal units.

13. Process according to Claim 8, characterised in that component a) is one or more organic or inorganic compounds which are insoluble or sparingly soluble in water, are fluid at below 80°C, do not react or react sufficiently slowly with water under the operating conditions required, and have a boiling point of at least 150°C at 1020 hPa (abs.), from the group comprising the paraffins, terpenes, fragrances, halogenated hydrocarbons, esters, plasticisers, ethers, alcohols, amines, acids, di- and polysilanes, carbosilanes siloxane copolymers or polyethyl silicates.

## Revendications

1. Procédé pour préparer des flocs ou poudres microencapsulés par séchage de mélanges aqueux contenant :
a) un ou plusieurs composés non thermoplastiques, émulsionnables à l'eau, ayant un point d'ébullition supérieur à celui de l'eau, et
b) au moins un polymère filmogène soluble dans l'eau, la teneur en le composant a) étant au plus de 95 % en poids par rapport au poids à sec des composants a) et (b),
caractérisé en ce que le polymère filmogène soluble dans l'eau a un point de floculation de 20 à 98°C, ou encore le point de floculation est ajusté à une température de 20 à 98°C à l'aide d'additifs, et le séchage s'effectue par séchage sur couche mince sur un intervalle de températures supérieur au point de floculation.

2. Procédé selon la revendication 1, caractérisé en ce que le séchage sur couche mince est effectué dans un séchoir à tambours.

3. Procédé selon la revendication 1 ou 2, caractérisé en ce que le séchage sur couche mince est mis en oeuvre à une température de 60 à 250°C.

4. Procédé selon la revendication 1, 2 ou 3, caractérisé en ce qu'on utilise comme polymère filmogène soluble dans l'eau ayant un point de floculation de 20 à 98°C des éthers de cellulose ayant un degré de substitution moyen DS inférieur à 3 ou des poly(alcools vinyliques) ayant un indice de saponification de 230 à 450.

5. Procédé selon la revendication 4, caractérisé en ce qu'on utilise des éthers de méthylhydroxyéthylcellulose ou des éthers de méthylcellulose ayant un degré de substitution moyen DS de 1,0 à 2,5, des éthers de méthylhydroxypropylcellulose ayant un degré de substitution moyen DS de 1,0 à 2,5 et contenant de 20 à 30 % en moles de groupes méthoxy et de 5 à 10 % en moles de groupes hydroxypropyle, des éthers d'hydroxypropylcellulose ayant un degré de substitution moyen DS inférieur à 3.

6. Procédé selon la revendication 1, 2 ou 3, caractérisé en ce qu'on utilise des polymères filmogènes solubles dans l'eau dont le point de floculation est ajusté à une température de 20 à 98°C par addition de sels, de solvants inertes, d'acides ou de bases.

7. Procédé selon la revendication 6, caractérisé en ce qu'on utilise des poly(acétates de vinyle) totalement ou partiellement saponifiés ou leurs copolymères avec par exemple l'éthylène, le propylène, d'autres esters vinyliques, avec l'acide acrylique ou méthacrylique ou leurs dérivés ou des acides dicarboxyliques ou leurs dérivés, ou encore que l'on utilise des polyvinylpyrrolidones, des polyoxazolines, de l'amidon et des dérivés de l'amidon, des polyurées, des polyuréthannes, des polyéthers, des polyamides, des polyesters, des polycarbonates, des protéines ou des polysaccharides modifiés.

8. Procédé selon l'une des revendications 1 à 7, caractérisé en ce qu'on utilise comme composant a) un ou plusieurs composés dont le point d'ébullition est d'au moins 150°C dans les conditions normales.

9. Procédé selon la revendication 8, caractérisé en ce qu'on utilise comme composant a) un ou plusieurs composés organiques du silicium de formule RₐSi(OR¹)₄₋ₐ ou leurs produits d'hydrolyse partielle, où R est un résidu hydrocarboné monovalent pouvant comporter au moins un substituant inerte vis-à-vis de l'eau à la température de séchage utilisée, R¹ désigne des résidus alkyle ou alcoxyalkyle identiques ou différents ayant chacun de 1 à 4 atomes de carbone, a vaut de 0 à 4, et qui ont un point d'ébullition d'au moins 150°C sous une pression absolue de 1020 hPa.

10. Procédé selon la revendication 8, caractérisé en ce qu'on utilise comme composant a) un ou plusieurs (poly)organosiloxanes constitués de motifs de formule R_{c}H_{d}Si(OR¹)ₑ(OH)_{f}O_{[4-c-d-e-f)/2]}, ayant un point d'ébullition d'au moins 150°C sous une pression absolue de 1020 hPa, où R est un résidu hydrocarboné monovalent pouvant comporter au moins un substituant inerte vis-à-vis de l'eau à la température de séchage utilisée, R¹ représente des résidus alkyle ou alcoxyalkyle identiques ou différents ayant chacun de 1 à 4 atomes de carbone, c vaut de 0 à 3, d vaut de 0 à 1, e vaut de 0 à 3 et f vaut de 0 à 3, du moment que la somme c+d+e+f est d'au plus 3,5 par motif.

11. Procédé selon la revendication 8, caractérisé en ce qu'on utilise comme composant a) un ou plusieurs (poly)organosiloxanes de formule R³R₂SiO(SiR₂O)ₙSiR₂R³, le résidu R représentant alors des résidus hydrocarbonés monovalents identiques ou différents, pouvant éventuellement porter un substituant inerte vis-à-vis de l'eau à la température de séchage utilisée, ou encore R est un hydrogène, du moment qu'à chaque atome de silicium auquel est lié un atome d'hydrogène est aussi lié au moins un résidu hydrocarboné, et R³ a les mêmes significations que R ou encore représente -OR², où R² est un atome d'hydrogène ou l'un des radicaux hydrocarbonés mentionnés pour R, ayant de 1 à 18 atomes de carbone, et n vaut 0 ou est un nombre entier.

12. Procédé selon la revendication 1, caractérisé en ce qu'on utilise comme polyorganosiloxanes des polydiméthylsiloxanes bloqués en bout par des groupes triméthylsiloxy ou des groupes diméthylvinyle, des polyméthylhydrogénosiloxanes bloqués en bout par des groupes triméthylsiloxy, des copolymères, bloqués en bout par des groupes triméthylsiloxy, constitués de motifs diméthylsiloxane et méthylhydrogénosiloxane, des polydiméthylsiloxanes bloqués en bout par des groupes diméthylhydrogénosiloxy, ainsi que des polydiméthylsiloxanes comportant dans chacun de leurs motifs terminaux un groupe hydroxyle lié à Si.

13. Procédé selon la revendication 8, caractérisé en ce qu'on utilise comme composant a) un ou plusieurs composés minéraux ou organiques, fluides en-dessous de 80°C, insolubles dans l'eau ou difficilement solubles dans l'eau, et qui, dans les conditions nécessaires d'utilisation, ne réagissent pas avec l'eau ou d'une manière suffisamment lente, et ont un point d'ébullition d'au moins 150°C sous une pression absolue de 1020 hPa, et choisis parmi l'ensemble comprenant les paraffines, les terpènes, les matières odorantes, les hydrocarbures halogénés, les esters, les plastifiants, les éthers, les alcools, les amines, les acides, les di- et polysilanes, les carbosilanes, les copolymères de siloxanes ou les poly(silicates d'éthyle).
